(19) Europäisches Patentamt
European Patent Office
Office européen des brevets

(11) **EP 2 567 200 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **11715696.8**

(22) Anmeldetag: **14.04.2011**

(51) Int Cl.:
*G01F 1/704* *(2006.01)*    *G01F 1/708* *(2006.01)*

(86) Internationale Anmeldenummer:
**PCT/EP2011/055944**

(87) Internationale Veröffentlichungsnummer:
**WO 2011/138147 (10.11.2011 Gazette 2011/45)**

(54) **VERFAHREN UND VORRICHTUNG ZUR BESTIMMUNG VON STRÖMUNGSEIGENSCHAFTEN EINES MEDIUMS IN EINER ROHRLEITUNG**

METHOD AND APPARATUS FOR DETERMINING FLOW PROPERTIES OF A MEDIUM IN A CONDUIT

PROCÉDÉ ET DISPOSITIF POUR DÉTERMINER DES PROPRIÉTÉS D'ÉCOULEMENT D'UN FLUIDE DANS UNE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2010 DE 102010028475**

(43) Veröffentlichungstag der Anmeldung:
**13.03.2013 Patentblatt 2013/11**

(73) Patentinhaber: **Endress+Hauser GmbH+Co. KG 79689 Maulburg (DE)**

(72) Erfinder:
• **MAYR, Andreas**
  **79539 Lörrach (DE)**
• **DREYER, Volker**
  **79541 Lörrach (DE)**
• **LOPATIN, Sergej**
  **79540 Lörrach (DE)**

(74) Vertreter: **Andres, Angelika Maria Endress+Hauser(DE)Holding, Patserve, Colmarer Strasse 6 79576 Weil am Rhein (DE)**

(56) Entgegenhaltungen:
**DE-U1- 29 607 315    US-A- 4 922 745
US-A1- 2005 005 710**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Bestimmung von zumindest einer Strömungseigenschaft eines im Wesentlichen laminar strömenden gasförmigen oder flüssigen Mediums in einer Rohrleitung. Bei dem gasförmigen Medium kann es sich gleichermaßen um ein Gas oder ein Gasgemisch handeln. Die Strömungseigenschaft ist beispielsweise die Strömungsgeschwindigkeit, die Strömungsrichtung, der Volumendurchfluss oder der Massedurchfluss. Die zu bestimmende Strömungsgeschwindigkeit kann hierbei auch Null sein, d.h. das Medium führt allenfalls eine thermische Bewegung aus. Das Medium strömt jedoch zumindest zeitweise laminar.

Bei einer Vielzahl industrieller Prozesse strömt ein Gas, ein Gasgemisch oder eine Flüssigkeit durch eine Rohrleitung. Um den Prozess steuern und/oder überwachen zu können ist es unter anderem erforderlich, die Strömungsgeschwindigkeit oder den Massedurchfluss des Mediums zu kennen. Aus dem Stand der Technik ist hierfür eine Vielzahl verschiedener Messprinzipien und Messgeräte bekannt.

Bei geringen Strömungsgeschwindigkeiten kommen häufig thermische Strömungssensoren zum Einsatz. In einer ersten Variante bestehen diese aus einem mit konstanter Heizleistung betriebenen Heizelement zur Erwärmung des vorbeiströmenden Mediums und aus zwei Temperatursensoren, wobei jeweils ein Temperatursensor stromabwärts und stromaufwärts des Heizelements angeordnet ist und die Mediumstemperatur erfasst. Aus der mit den beiden Temperatursensoren bestimmten Temperaturdifferenz kann die Strömungsgeschwindigkeit ermittelt werden. Weiterhin bekannt sind so genannte thermische Anemometer. Hierbei wird ein Heizelement auf eine konstante Temperatur geregelt. Die hierzu erforderliche Heizleistung ist umso größer, je schneller das Medium an dem Heizelement vorbei strömt und hierbei Wärme abführt.

US 2005/005710 A1 beschreibt ein Verfahren zur Messung des Durchflusses eines Mediums entlang eines Rohres, bei dem eine Heizquelle ein Teil eines Mediums erwärmt und dadurch dessen Temperatur erhöht und dadurch dessen Dichte senkt. Eine optische Messvorrichtung misst die Änderung in einer optischen Eigenschaft des Teils des Mediums, welches eine Dichteänderung erfahren hat und durch das Rohr fließt. Die Zeit, die der erwärmte Teil des Mediums benötigt, um von der Heizquelle zu der optischen Messvorrichtung zu gelangen, wird gemessen. Die gemessene Zeit und der Abstand zwischen der Heizquelle und der Messvorrichtung erlauben eine Berechnung der Geschwindigkeit des Mediums in dem Rohr.

DE 296 07 315 U1 beschreibt einen Sensor zur thermischen Durchflussmessung von Medien, bestehend aus einem Heizdraht als Wärmequelle, der Wärmeenergie an das durchfließende Medium abgibt, sowie aus einem Temperatursensor, der in einem definierten Abstand von dieser Wärmequelle in Strömungsrichtung angebracht ist und die Erwärmung des Mediums registriert.

US 4 922 745 A beschreibt einen Wandler zum Messen von beispielsweise Dichte oder Geschwindigkeit eines Fluids mit einer Stimmgabel. Die Stimmgabel wird in ihrer Resonanzfrequenz von piezoelektrischen Anregungselementen zu Schwingungen angeregt, die von piezoelektrischen Empfangselementen empfangen werden.

Nachteilig bei thermischen Strömungssensoren ist, dass sie empfindlich gegenüber sich bildendem Ansatz sind und mit steigender Lebensdauer eine thermische Drift aufweisen. Dies macht eine häufige Wartung und/oder neue Kalibrierung erforderlich. Sehr zuverlässig sind auf dem Coriolisprinzip basierende Messgeräte. Diese bestehen im Wesentlichen aus mindestens einem in Schwingungen versetzbaren Rohr, welches als Zwischenstück in die Rohrleitung eingebracht wird und an Hand des Corioliseffekts die Strömungsgeschwindigkeit des Mediums bestimmt. Derartige Messgeräte existieren in einer Vielzahl von Ausgestaltungen und Nennweiten. Der Nachteil von Coriolismessgeräten ist der hohe Anschaffungspreis.

Die Aufgabe der Erfindung besteht darin, ein Verfahren zur zuverlässigen Bestimmung mindestens einer Strömungseigenschaft eines im Wesentlichen laminar strömenden Mediums anzugeben, welches darüber hinaus kostengünstig umsetzbar ist. Weiterhin ist eine entsprechende Vorrichtung zur Durchführung des Verfahrens bereitzustellen.

Die Aufgabe wird dadurch gelöst, dass von mindestens einem in die Rohrleitung eingebrachten Modulationselement in dessen Umgebung zumindest für den Fall, dass das Medium mit einer von Null verschiedenen Geschwindigkeit strömt, zumindest zeitweise eine Änderung der Dichte des Mediums erzeugt wird, dass mindestens eine von dem Modulationselement beabstandet in die Rohrleitung eingebrachte mechanisch schwingfähige Einheit zu resonanten Schwingungen angeregt wird, dass mechanische Schwingungen von der mechanisch schwingfähigen Einheit empfangen und in ein elektrisches Empfangssignal umgewandelt werden, wobei das Empfangssignal sensitiv für die von dem Modulationselement veränderte Dichte ist, und dass aus der Reaktion des Empfangssignals der mechanisch schwingfähigen Einheit auf die Änderung in der Dichte die zumindest eine Strömungseigenschaft des Mediums bestimmt wird.

Erfindungsgemäß wird die Dichte des Mediums von einem Modulationselement beeinflusst und die Reaktion der in einem gewissen Abstand von dem Modulationselement angeordneten mechanisch schwingfähigen Einheit detektiert, indem das Empfangssignal ausgewertet wird. Das Modulationselement beeinflusst die Dichte beispielsweise über die Temperatur oder den Druck des Mediums. Die bestimmbaren Strömungseigenschaften sind das Vorhandensein einer Strömung und die Strömungsrichtung, und je nach Ausgestaltung die Strömungsgeschwindigkeit, der Volumendurchfluss und/oder der Massedurchfluss.

Die mechanisch schwingfähige Einheit ist bevorzugt eine Schwinggabel, welche aus zwei auf einer Membran angeordneten Paddeln besteht. Es kann sich aber auch um einen Einstab handeln. Messgeräte mit einer Schwinggabel sind insbesondere zur Füllstands- und Dichtemessung bekannt. Die besondere Ausgestaltung der Schwinggabel zur Anwendung in gasförmigen Medien ist beispielsweise in der WO 2007074004 A1 beschrieben. Dort ist beispielsweise angegeben, dass das Produkt aus Dicke und Dichte eines Paddels möglichst klein und die Oberfläche eines Paddels möglichst groß ist. Für Details wird auf genanntes Dokument verwiesen. Die Schwinggabel wird zur Messung zu Schwingungen auf ihrer Resonanzfrequenz angeregt und die mechanischen Schwingungen empfangen und in ein elektrisches Empfangssignal umgewandelt. In der Regel dient sowohl zur Anregung als auch zum Empfang mindestens ein piezoelektrischer Wandler. In Abhängigkeit von der Dichte des die Paddel umgebenden Mediums ändert sich die Resonanzfrequenz. Aus einer Änderung in der Resonanzfrequenz ist daher eine Änderung in der Dichte des Mediums detektierbar. Eine durch das Modulationselement zeitweise oder dauerhaft veränderte Dichte ermöglicht eine Aussage darüber, ob das Medium ruht oder strömt. Darüber hinaus ist die Strömungsgeschwindigkeit bestimmbar, beispielsweise durch eine Laufzeitmessung einer vom Modulationselement im strömenden Medium hervorgerufenen Dichteschwankung.

Ist die Strömungsrichtung des Mediums vorgegeben oder bekannt, genügt eine einzige mechanisch schwingfähige Einheit zur Bestimmung der Strömungsgeschwindigkeit und des Durchflusses. Ist die Strömungsrichtung hingegen nicht bekannt, werden zwei schwingfähige Einheit symmetrisch um das Modulationselement angeordnet, sodass zum einen die Strömungsrichtung bestimmt und zum anderen in Abhängigkeit der Strömungsrichtung mit der einen oder mit der anderen schwingfähigen Einheit die Strömungsgeschwindigkeit und/oder der Volumen- oder Massedurchfluss gemessen werden kann. Es versteht sich von selbst, dass jeweils die stromabwärts des Modulationselements angeordnete schwingfähige Einheit zur Auswertung in Bezug auf die Strömungseigenschaft an Hand der geänderten physikalischen Größe herangezogen wird. Weiterhin ist es möglich, die Empfangssignale der beiden schwingfähigen Einheiten zu vergleichen und hieraus die zu bestimmende Strömungseigenschaft zu ermitteln.

In einer ersten Ausgestaltung der erfindungsgemäßen Lösung wird der Rohrdurchmesser von dem Modulationselement verringert. Das Modulationselement, ist in diesem Fall ein Begrenzungselement, das an der Rohrinnenwand angebracht ist und die laminare Strömung nicht beeinträchtigt. Ruht das Medium, werden hierdurch keine Eigenschaften des Mediums verändert. Strömt das Medium, führt dieses Modulationselement entlang einer Längsachse der Rohrleitung zu einer Druckdifferenz vor und hinter dem Modulationselement. Hiermit verbunden ist eine Dichtedifferenz, welche von zwei schwingfähigen Einheiten bestimmt wird. Hierzu wird jeweils eine schwingfähige Einheit in Strömungsrichtung vor und hinter dem Begrenzungselement in die Rohrleitung eingebracht. Diese Ausgestaltung ist für gasförmige Medien geeignet.

In einer alternativen Ausgestaltung wird durch das Modulationselement die Temperatur des Mediums in einer Umgebung des Modulationselements verändert. Im einfachsten Fall wird als Modulationselement ein Heizelement in die Rohrleitung eingebracht. Diese Ausgestaltung ist für gasförmige und eine Vielzahl an flüssigen Medien geeignet.

Bei einer Weiterbildung dieser Ausgestaltung wird das Modulationselement konstant beheizt. Handelt es sich bei dem Modulationselement um ein elektrisches Heizelement, wird dieses hierzu mit einem konstanten Heizstrom versorgt.

In einer Ausgestaltung des Verfahrens wird eine Differenz der Schwingfrequenzen der ersten mechanisch schwingfähigen Einheit und einer zweiten mechanisch schwingfähigen Einheit bestimmt, wobei die erste mechanisch schwingfähige Einheit und die zweite mechanisch schwingfähige Einheit entlang einer Längsachse der Rohrleitung im Wesentlichen symmetrisch um das Modulationselement angeordnet sind, und dass aus der Differenz der Schwingfrequenzen das Vorhandensein einer Strömung, die Strömungsrichtung und/oder die Strömungsgeschwindigkeit des Mediums ermittelt wird. Alternativ werden die erste und die zweite mechanisch schwingfähige Einheit nicht symmetrisch um das Modulationselement angeordnet, sondern in voneinander verschiedenen Abständen. Bevorzugt werden die schwingfähigen Einheiten auf einer gemeinsamen Mantellinie der Rohrleitung in diese eingebracht.

Gemäß einer Ausgestaltung wird das Modulationselement mit einem zeitlich veränderlichen Heizstrom beheizt, sodass eine zeitabhängige Änderung in der Temperatur des Mediums erzeugt wird. In der Umgebung des als Heizelement ausgestalteten Modulationselements wird das Medium durch den zeitlich variablen Heizstrom bevorzugt periodisch erhitzt und somit eine Dichteänderung hervorgerufen, welche sich mit dem strömenden Medium mit bewegt und welche von der mechanisch schwingfähigen Einheit detektiert werden kann. Natürlich auftretende Temperaturschwankungen sind träger als die von dem Heizelement induzierten, welche bevorzugt mit einigen Hertz hervorgerufen werden. Dadurch sind die mit der induzierten Temperaturänderung korrelierten Dichteschwankungen auch bei nicht konstanter Mediumstemperatur detektierbar.

Eine hiermit verbundene Ausgestaltung des Verfahrens sieht vor, dass aus dem Abstand zwischen der mechanisch schwingfähigen Einheit und dem Modulationselement und aus der zeitlichen Differenz zwischen der erzeugten Änderung in der Temperatur des Mediums und einer Änderung in dem Empfangssignal der schwingfähigen Einheit als Reaktion auf die Änderung der Temperatur des vorbei strömenden Mediums die Strömungsgeschwindigkeit und/oder der Volumendurchfluss des Mediums bestimmt wird. In einer bevorzugten Weiterbildung wird eine zweite mechanisch schwingfähige Einheit entlang einer Längsachse der Rohrleitung bezüglich der ersten schwingfähigen Einheit auf der anderen Seite des Modulationselements angeordnet und aus dem Empfangssignal der ersten und zweiten schwingfähigen Einheit bestimmt, ob das Medium mit einer von Null verschiedenen Geschwindigkeit strömt und gegebenenfalls in welche Richtung das Medium strömt. In Abhängigkeit der Strömungsrichtung wird mit der ersten oder der zweiten mechanisch schwingfähigen Einheit die Strömungsgeschwindigkeit bestimmt.

Eine alternative Ausführungsform besteht darin, dass aus dem Abstand d1, in welchem eine zweite mechanisch schwingfähige Einheit von der ersten mechanisch schwingfähigen Einheit zwischen dieser und dem Modulationselement in der Rohrleitung angeordnet ist, und aus der zeitlichen Differenz zwischen der mit der zweiten schwingfähigen Einheit detektierten Änderung der Schwingfrequenz aufgrund der Temperaturänderung des Mediums und der mit der ersten schwingfähigen Einheit detektierten Änderung der Schwingfrequenz aufgrund der Temperaturänderung die Strömungsgeschwindigkeit und/oder der Volumendurchfluss bestimmt wird. Hierdurch wird die Abhängigkeit der Messung von der Reaktionsdauer des Mediums auf die Änderung in dem Heizstrom vermieden, was die Bestimmung der Strömungsgeschwindigkeit einfacher und genauer macht.

Eine vorteilhafte Weiterbildung des Verfahrens sieht vor, dass von der ersten mechanisch schwingfähigen Einheit und/oder der zweiten mechanisch schwingfähigen Einheit die Dichte des Mediums bestimmt wird und aus der Dichte und der Strömungsgeschwindigkeit der Massendurchfluss bestimmt wird.

Weiterhin wird die Aufgabe durch eine Vorrichtung zur Bestimmung von zumindest einer Strömungseigenschaft eines im Wesentlichen laminar strömenden gasförmigen oder flüssigen Mediums in einer Rohrleitung gelöst. Die Lösung besteht darin, dass mindestens ein Modulationselement in die Rohrleitung eingebracht ist, welches in seiner Umgebung zumindest für den Fall, dass das Medium mit einer von Null verschiedenen Geschwindigkeit strömt, zumindest zeitweise eine Änderung der Dichte des Mediums erzeugt, dass mindestens eine mechanisch schwingfähige Einheit von dem Modulationselement beabstandet in die Rohrleitung eingebracht ist und resonante Schwingungen durchführt, dass der mechanisch schwingfähigen Einheit mindestens eine Elektronikeinheit zugeordnet ist, welche mechanische Schwingungen von der mechanisch schwingfähigen Einheit empfängt und in ein elektrisches Empfangssignal umwandelt, wobei das Empfangssignal sensitiv für die von dem Modulationselement veränderte Dichte ist, und dass die Elektronikeinheit aus der Reaktion des Empfangssignals der mechanisch schwingfähigen Einheit auf die Änderung in der Dichte die zumindest eine Strömungseigenschaft des Mediums bestimmt.

In einer ersten Ausgestaltung der erfindungsgemäßen Vorrichtung ist als Modulationselement ein Begrenzungselement in die Rohrleitung eingebracht, welches den Rohrdurchmesser verringert und einen Druckgradienten in einem strömenden Medium erzeugt. Das Begrenzungselement fungiert sozusagen als Blende.

In einer alternativen Ausgestaltung ist als Modulationselement ein Heizelement in die Rohrleitung eingebracht, welches in einer Umgebung des Heizelements eine Temperaturänderung des Mediums bewirkt. Das Heizelement ist konstant oder zeitlich variabel beheizt.

Eine Ausgestaltung der Vorrichtung sieht vor, dass eine zweite mechanisch schwingfähige Einheit derart in die Rohrleitung eingebracht ist, dass die erste schwingfähige Einheit und die zweite schwingfähige Einheit entlang einer Längsachse der Rohrleitung im Wesentlichen symmetrisch um das Modulationselement angeordnet sind. Alternativ ist die zweite schwingfähige Einheit in einem Abstand zu dem Modulationselement angeordnet, welcher von dem Abstand, in welchem die erste schwingfähige Einheit relativ zu dem Modulationselement angeordnet ist, verschieden ist. In jedem Fall sind die beiden schwingfähigen Einheiten so angeordnet, dass sich jeweils eine schwingfähige Einheit in Strömungsrichtung vor und hinter dem Modulationselement befindet. Dies ermöglicht die Bestimmung der Strömungsrichtung und die Bestimmung weiterer Strömungseigenschaften bei unterschiedlichen Strömungsrichtungen.

Gemäß einer weiteren Ausgestaltung ist mindestens eine weitere mechanisch schwingfähige Einheit zwischen dem Modulationselement und der ersten mechanisch schwingfähigen Einheit und/oder zwischen dem Modulationselement und der zweiten mechanisch schwingfähigen Einheit angeordnet. Insgesamt sind also zwei oder vier schwingfähige Einheiten in die Rohrleitung eingebracht, wobei jeweils zwei in Strömungsrichtung hinter dem Modulationselement angeordnet sind. Bei bekannter Strömungsrichtung sind lediglich zwei schwingfähige Einheiten erforderlich.

Mit den Ausgestaltungen der Vorrichtung einhergehende Ausgestaltungen des Verfahrens zur Bestimmung mindestens einer Strömungseigenschaft sind im Zusammenhang mit dem Verfahren beschrieben. Das jeweilige Verfahren wird in der Elektronikeinheit ausgeführt.

Die erfindungsgemäße Vorrichtung und das erfindungsgemäße Verfahren werden anhand der nachfolgenden Figuren gemeinsam näher erläutert. Es zeigen jeweils schematisch:

Fig. 1      eine Rohrleitung mit einem Heizelement und einer mechanisch schwingfähigen Einheit;

Fig. 2     eine Rohrleitung mit zwei symmetrisch um ein Heizelement angeordneten mechanisch schwingfähigen Einheiten;

Fig. 3     eine Rohrleitung mit zwei auf derselben Seite neben einem Heizelement angeordneten mechanisch schwingfähigen Einheiten;

Fig. 3a    einen strömungsrichtungsunabhängigen Aufbau gemäß Fig. 3;

Fig. 4     eine Rohrleitung mit einem Begrenzungselement und zwei mechanisch schwingfähigen Einheiten.

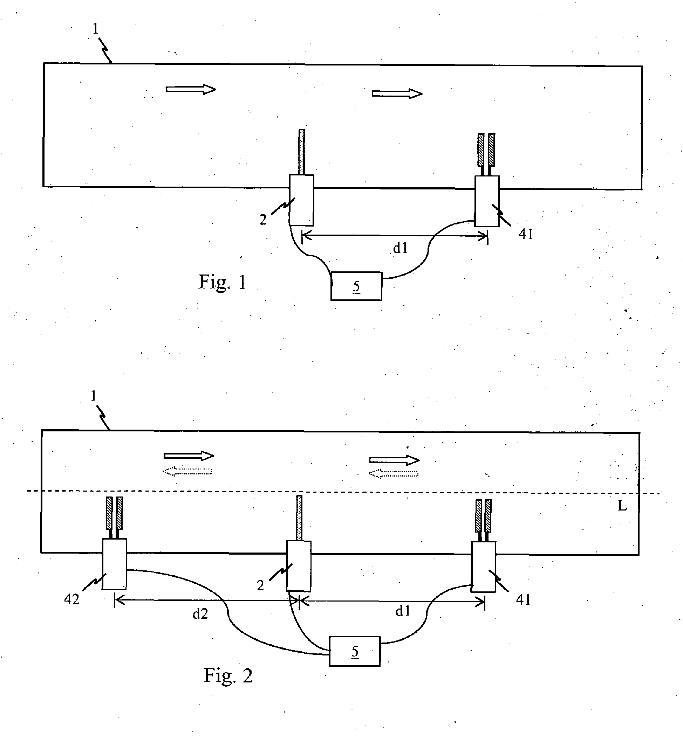

In Fig. 1 ist ein einfacher Aufbau dargestellt, mit welchem nach dem erfindungsgemäßen Verfahren die Strömungsgeschwindigkeit eines gasförmigen Mediums bei bekannter Strömungsrichtung bestimmt werden kann. Das Verfahren ist gleichermaßen bei Flüssigkeiten anwendbar, sofern deren Dichte eine hohe Temperaturabhängigkeit aufweist. Beispiele hierfür sind Benzin oder Benzol. Um eine zuverlässige Messung zu gewährleisten sollte das Medium im Wesentlichen laminar strömen. In diesem Beispiel strömt das Medium von links nach rechts durch die Rohrleitung, wie durch die Pfeile angedeutet ist. Zur Modulation der Dichte des Mediums ist ein Heizelement in die Rohrleitung eingebracht. Das Heizelement kann hierbei in die Rohrleitung hineinragen oder an der Wandung im Inneren der Rohrleitung im Wesentlichen flach angeordnet sein. Beispielsweise ist das Heizelement ein spiralförmiger Draht oder ein in Dünn- oder Dickschichttechnik auf ein Substrat aufgebrachter Platinwiderstand. In jedem Fall handelt es sich um ein Heizelement, das schnell auf Änderungen in dem Heizstrom reagiert, sodass die aktuelle Temperatur des Heizelements relativ genau steuerbar ist.

In Strömungsrichtung hinter dem Heizelement ist eine mechanisch schwingfähige Einheit im Abstand d1 zum Heizelement angeordnet. Die mechanisch schwingfähige Einheit ist in dieser bevorzugten Ausführungsform eine so genannte Schwinggabel mit zwei Paddeln, deren Fläche und Dichte auf die Anwendung in gasförmigen Medien abgestimmt sind. Um eine ausreichend hohe Sensitivität für die Gasdichtemessung zu erreichen weisen die Paddel eine große Fläche auf und sind sehr leicht. Gewöhnlicherweise liegt die Empfindlichkeit S von für die Gasmessung geeigneten Schwinggabeln im Bereich von 5-10 cm$^3$/g. Alternativ ist die schwingfähige Einheit ein so genannter Einstab, welcher aus der Füllstandsmessung von Schüttgütern bekannt ist. Auch der Einstab ist beispielsweise in seiner Fläche und seiner Masse, sowie durch frequenzangepasste Kompensationselemente im Inneren des Einstabs an die Gas- und/oder Flüssigkeitsmessung angepasst.

Die Bestimmung der mindestens einen Strömungseigenschaft erfolgt in einer Elektronikeinheit, welche mit dem Heizelement und mit der schwingfähigen Einheit verbunden ist. Bevorzugt handelt es sich hierbei um einen Mikroprozessor. Die schwingfähige Einheit kann eine eigene Elektronikeinheit aufweisen, welche zur Regelung der Anregung und zur Verarbeitung der Empfangssignale dient.

Das Heizelement erzeugt zeitweise eine Temperaturerhöhung ΔT des das Heizelement umgebenden Mediums. Hiermit geht eine Verminderung der Mediumsdichte einher. Die Resonanzfrequenz der schwingfähigen Einheit ist von der Dichte des sie umgebenden Mediums abhängig, sodass eine vom Heizelement ausgehende Dichteänderung im Medium nach einer bestimmten Zeitdauer dt, welche von dem Abstand d1 und der Strömungsgeschwindigkeit v des Mediums abhängt, im Empfangssignal der schwingfähigen Einheit erkennbar ist. Dies gilt für alle Gase und für Flüssigkeiten, deren Temperaturkoeffizient ausreichend hoch ist. Das Verfahren ist somit insbesondere für Gase geeignet. Für ein Gasmedium ist die aus der Dichteänderung resultierende Frequenzänderung ΔF bezogen auf die Schwingfrequenz $F_0$ bei einer Durchschnittstemperatur

$$T = T_0 + \frac{\Delta T}{2}$$ durch folgende Gleichung gegeben:

$$\frac{\Delta F}{F_0} = \sqrt{\frac{1}{1 + S \cdot \rho_0 \frac{T_0}{T_0 + \Delta T}}} - \sqrt{\frac{1}{1 + S \cdot \rho_0}}$$

wobei S die Empfindlichkeit der Schwinggabel und $\rho_0$ die Gasdichte bei der Temperatur $T_0$ ist.

Je geringer die Mediumsdichte ist, desto höher muss die Empfindlichkeit der Schwinggabel sein, um bei vorgegebener Temperaturdifferenz eine bestimmte Frequenzdifferenz zu erzeugen. Das Medium sollte im Wesentlichen laminar fließen, damit gewährleistet ist, dass keine Turbulenzen auftreten, welche die temperaturbedingten Dichteschwankungen ausgleichen.

Um die Strömungsgeschwindigkeit zu berechnen, wird die Zeitdauer dt aus einem Vergleich des Heizstroms oder der Heizleistung und des Frequenzverlaufs ermittelt. Beispielsweise wird die Zeitspanne zwischen einer steigenden Flanke im Heizstrom und einer steigenden Flanke in der Frequenz der schwingfähigen Einheit bestimmt. Die Strömungsgeschwindigkeit von durchschnittlich schweren Gasen wie Sauerstoff, Stickstoff oder Kohlendioxid kann mit einer für die Dichtemessung in Gas ausgestalteten Schwinggabel bei Normaldruck mittels einer Temperaturerhöhung von ca. 0,1 - 0,2 K bestimmt werden. Bei leichten Gasen wie z.B. Wasserstoff, Helium oder Methan ist eine Schwinggabel mit höherer Empfindlichkeit oder ein erhöhter Prozessdruck notwendig.

In einer vorteilhaften Ausgestaltung wird das Heizelement mit einem sinusförmigen Heizstrom beheizt. Dem an dem Heizelement vorüber strömenden Medium wird entsprechend ein sinusförmiges Temperatur- und Dichteprofil aufgeprägt, welches jedoch gegenüber dem Sinus des Heizstroms eine bestimmte Phasenverschiebung aufweist. Der Frequenzverlauf der Schwingungen der schwingfähigen Einheit ist ebenfalls sinusförmig, wobei auf Grund des Gastransports eine weitere Phasenverschiebung gegenüber dem Sinus des Heizstroms auftritt. Diese Phasenverschiebung ist ein Maß für die Auswertung der Strömungsgeschwindigkeit. Um aus der Distanz d1 und der Zeit dt die Strömungsgeschwindigkeit v genau bestimmen zu können, muss die Verzögerung t1 zwischen dem Erzeugen der Temperaturänderung des Heizelements und dem Eintreten der Temperatur- bzw. Dichteänderung des Mediums vernachlässigbar gering oder bekannt sein. Die bekannte Verzögerung t1 wird dann von der ermittelten Zeitdauer dt subtrahiert.

Insbesondere bei einem sinusförmigen periodischen Heizstrom ist diese Ausgestaltung des Messverfahrens nur anwendbar, wenn die Zeitdauer dt zwischen Erzeugung der Temperaturänderung und Erfassen der Dichteänderung geringer als die Periodendauer der Oszillation ist. Die Frequenz des Heizstroms, sowie die Distanz d1 sind daher entsprechend der zu erwartenden Strömungsgeschwindigkeiten zu wählen. Beispielsweise sind bei einer sinusartigen Temperaturschwankung mit 5 Hz und einem Abstand d1 von 50 cm Strömungsgeschwindigkeiten bis maximal 2,5m/sec messbar. Bei hohen Strömungsgeschwindigkeiten werden daher bevorzugt keine periodischen Temperaturschwankungen hervorgerufen, sondern die Temperatur in bestimmten Abständen kurzzeitig verändert und das Empfangssignal der schwingfähigen Einheit bezüglich korrelierten Frequenzänderungen ausgewertet. Alternativ kann die Amplitude der periodischen Temperaturschwankungen variiert werden, beispielsweise, indem jedes x-te Maximum doppelt so hoch ist wie die anderen. Hierdurch ist auch eine Phasenverschiebung erkennbar, die größer als $2\pi$ ist, wobei die maximal erkennbare Phasenverschiebung von der Wahl von x abhängt.

Bevorzugt werden neben der Strömungsgeschwindigkeit weitere Größen bestimmt. Beispielsweise ist bei bekanntem Rohrdurchmesser aus der Strömungsgeschwindigkeit v bzw. aus dem Abstand d1 und der Zeitdauer dt der Volumendurchfluss $Q_V$ bestimmbar.

Aus der gemittelten Schwingfrequenz

$$F = F_0 + \frac{\Delta F}{2}$$

bei der mittleren Temperatur T, einer Referenzfrequenz $F_{vak}$ der Schwingung im Vakuum bei der mittleren Temperatur T, sowie der Empfindlichkeit S der schwingfähigen Einheit, ist die Mediumsdichte ρ gemäß

$$\rho = \frac{1}{S}\left(\frac{F_{vak}^2}{F^2} - 1\right)$$

bestimmbar.

Hiermit ist weiterhin der Massendurchfluss $Q_M$ des Mediums als Produkt aus Volumendurchfluss $Q_V$ und Dichte ρ bestimmbar.

Die Empfindlichkeit S und die Referenzfrequenzen für verschiedene mittlere Temperaturen sind beispielsweise in einer zur schwingfähigen Einheit gehörigen Regel-/Auswerteeinheit, z.B. einem Mikrocontroller, gespeichert. Alternativ sind diese Parameter, ebenso wie die anwendungsspezifischen Daten wie Rohrdurchmesser D und Abstand d1, in der Elektronikeinheit gespeichert, welche die Strömungseigenschaften bestimmt.

In Fig. 2 ist eine Messanordnung zur Durchführung des für Fig. 1 beschriebenen Verfahrens für den Fall dargestellt, dass die Strömungsrichtung nicht bekannt öder variabel ist, oder dass nicht bekannt ist, ob das Medium überhaupt strömt. Die Messung wird ermöglicht, indem beidseits des Heizelements eine schwingfähige Einheit in die Rohrleitung eingebracht wird. Der Abstand d2, in welchem die zweite schwingfähige Einheit von dem Heizelement angeordnet ist, entspricht vorzugsweise dem Abstand d1, den die erste schwingfähige Einheit zu dem Heizelement aufweist. Die Abstände d1 und d2 können sich aber auch unterscheiden. In Abhängigkeit der Strömungsrichtung ist dann entsprechend der Abstand d1 oder d2 zur Berechung der Strömungsgeschwindigkeit heranzuziehen. Um die Ausbildung von Turbulenzen zu vermeiden sind das Heizelement, die erste schwingfähige Einheit und die zweite schwingfähige Einheit auf einer gemeinsamen Mantellinie der Rohrleitung angeordnet. Ist ein laminarer Verlauf der Strömung gewährleistet, ist auch eine versetzte Anordnung möglich.

Zur Erkennung, ob das Medium strömt oder im Wesentlichen in der Rohrleitung steht, werden das Anregungssignal des Heizelements, beispielsweise der Heizstrom, und die Empfangssignale der ersten schwingfähigen Einheit und der zweiten schwingfähigen Einheit oder nur die beiden letzteren miteinander verglichen. Wird die Temperatur des Heizelements verändert und tritt in Folge dessen weder bei der ersten schwingfähigen Einheit, noch bei der zweiten schwingfähigen Einheit eine Frequenzänderung auf, strömt das Medium nicht, sondern führt allenfalls thermische Bewegungen aus. Ändert sich hingegen die Frequenz der Schwingung der ersten schwingfähigen Einheit oder der zweiten schwingfähigen Einheit und ist diese Änderung mit einer Änderung der Temperatur des Heizelements korreliert, strömt das Medium in Richtung derjenigen schwingfähigen Einheit, deren Schwingfrequenz sich geändert hat. Die Bestimmung von Strömungsgeschwindigkeit, Volumen- und/oder Massedurchfluss erfolgt dann mit der in Strömungsrichtung hinter dem Heizelement angeordneten schwingfähigen Einheit.

Mit der in Fig. 2 dargestellten Anordnung können Strömungseigenschaften auch auf eine alternative Art und Weise bestimmt werden. Hierzu wird das Heizelement mit einem konstanten Heizstrom geheizt, sodass das umgebende Medium nicht nur zeitweise, sondern dauerhaft erwärmt wird. Zur Bestimmung der Strömungseigenschaften des Mediums wird die Differenz der Schwingfrequenzen der symmetrisch um das Heizelement angeordneten ersten schwingfähigen Einheit und der zweiten schwingfähigen Einheit gebildet. Fließt das Medium nicht, stellt sich mit der Zeit eine homogene Mediumstemperatur ein. Temperatur und Dichte des Mediums sind dann in der Umgebung beider mechanisch schwingfähiger Einheiten gleich. Bestimmt man die Frequenzdifferenz zwischen der ersten schwingfähigen Einheit und der zweiten schwingfähigen Einheit ergibt sich nur eine fertigungsbedingte Differenz in den Resonanzfrequenzen. Strömt das Medium hingegen mit einer von Null verschiedenen Geschwindigkeit durch die Rohrleitung, erwärmt es sich beim Passieren des Heizelements, sodass die stromabwärts angeordnete schwingfähige Einheit eine temperaturbedingt geringere Dichte misst als die stromaufwärts angeordnete schwingfähige Einheit. Die Frequenzdifferenz der beiden schwingfähigen Einheiten weist dann neben dem fertigungsbedingten Betrag einen weiteren Term auf, in dessen Vorzeichen sich die Strömungsrichtung widerspiegelt. Die von dem Heizelement erzeugte Temperaturerhöhung des vorbeiströmenden Mediums beträgt beispielsweise 0,1 - 0,2 K. Prinzipiell eignet sich dieses Messverfahren für alle Gase. Um zuverlässig messen zu können sind eine Mindestdichte von circa einem Milligramm pro Kubikzentimeter oder ein Prozessdruck von circa einem bar notwendig. Bei leichten Gasen wie Wasserstoff oder Helium sind ein höherer Prozessdruck ab z.B. 5 bar und/oder eine höhere Empfindlichkeit der schwingfähigen Einheit erforderlich. Weiterhin ist das Messverfahren mit einer für Flüssigkeiten optimierten schwingfähigen Einheit für Flüssigkeiten mit einer stark temperaturabhängigen Dichte anwendbar.

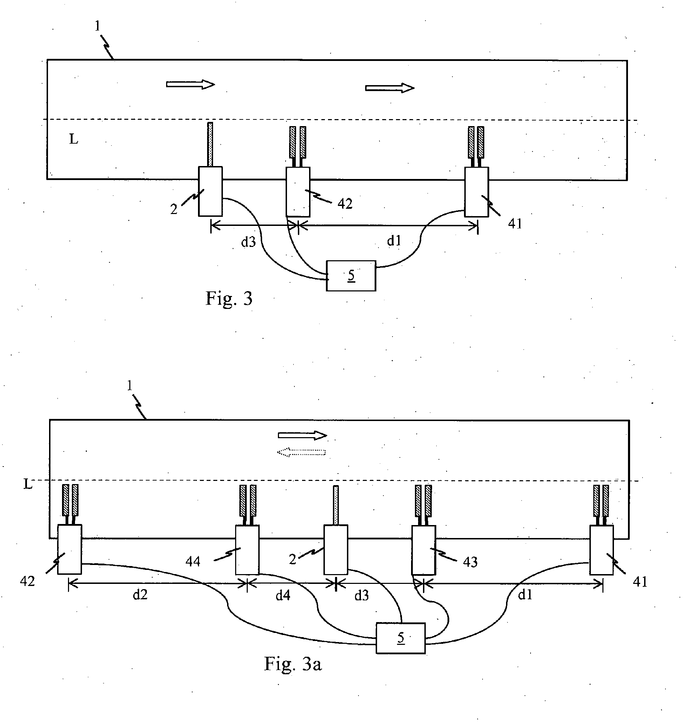

Fig. 3 offenbart eine Anordnung, mit welcher die Strömungseigenschaften des Mediums auf ähnliche Weise bestimmbar sind, wie im Zusammenhang mit der Fig. 1 beschrieben. Das Heizelement erzeugt hierzu ebenfalls ein veränderliches Temperatur- bzw. Dichteprofil im strömenden Medium. Im Gegensatz zu der bereits beschriebenen Ausgestaltung wird jedoch nicht das Anregungssignal des Heizelements mit dem Empfangssignal der schwingfähigen Einheit verglichen, sondern es wird eine zweite schwingfähige Einheit zwischen dem Heizelement und der ersten schwingfähigen Einheit in die Rohrleitung eingebracht und die Empfangssignale der beiden schwingfähigen Einheiten miteinander verglichen. Der Abstand d1 der ersten schwingfähigen Einheit von der zweiten schwingfähigen Einheit entspricht hierbei bevorzugt dem Abstand der ersten schwingfähigen Einheit von dem Heizelement im ersten Ausführungsbeispiel. Der Abstand d3 zwischen der zweiten schwingfähigen Einheit und dem Heizelement ist geringer als d1.

Der Vorteil beim Vergleich der beiden Frequenzverläufe ist zum einen, dass zwei gleichartige Signale miteinander verglichen werden, was die Auswertung besonders einfach macht. Zum anderen ist die von der Strömungsgeschwindigkeit abhängige Zeitdauer dt zwischen der Reaktion der zweiten schwingfähigen Einheit und der Reaktion der ersten schwingfähigen Einheit auf die veränderte Dichte unabhängig von der Verzögerung, welche zwischen Anregung der Temperaturänderung im Heizelement und tatsächlich stattfindender Temperaturänderung im Medium liegt. Die Strömungsgeschwindigkeit wird hier direkt aus dem Abstand d1 und der ermittelten Zeitdauer dt bestimmt. Die übrigen Größen werden gemäß dem bereits beschriebenen Verfahren berechnet.

Im Zusammenhang mit dieser Ausführung ist es ebenfalls möglich, symmetrisch zu der ersten schwingfähigen Einheit und der zweiten schwingfähigen Einheit in Strömungsrichtung vor dem Heizelement eine dritte schwingfähige Einheit und eine vierte schwingfähige Einheit in die Rohrleitung einzubringen. Durch eine derartige Anordnung können die Strömungseigenschaften des Mediums auch mit diesem Verfahren bei variabler oder unbekannter Strömungsrichtung bestimmt werden. Ein solcher Aufbau ist in Fig. 3a gezeigt. Die Abstände d1 und d2 bzw. d3 und d4 können hierbei auch unterschiedlich sein. Bei der Berechung der Strömungsgeschwindigkeit ist in Abhängigkeit der Fließrichtung dann d1 oder d2 zu verwenden.

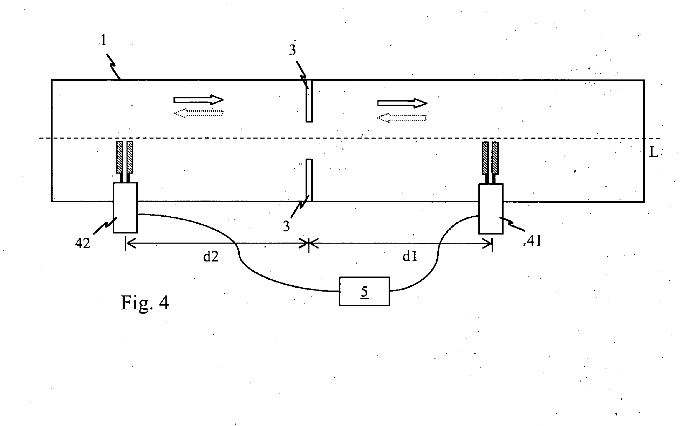

Fig. 4 zeigt eine weitere Ausführungsform der erfindungsgemäßen Vorrichtung mit einem eine Verjüngung der Rohrleitung bewirkenden Begrenzungselement. Im einfachsten Fall ist das Begrenzungselement eine ringförmige Blende. Im Wesentlichen symmetrisch um das Begrenzungselement sind eine erste mechanisch schwingfähige Einheit und eine zweite mechanisch schwingfähige Einheit in die Rohrleitung eingebracht. Bevorzugt sind die beiden schwingfähigen Einheiten auf einer gemeinsamen Mantellinie angeordnet. Die versetzte Anordnung und/oder die Positionierung in unterschiedlichen Abständen zu dem Begrenzungselement sind jedoch ebenfalls möglich. Diese Vorrichtung ist bei allen gasförmigen Medien einsetzbar. Das Begrenzungselement führt ab einer bestimmten Mindestgeschwindigkeit des Gasmediums hinter dem Begrenzungselement zu einem Druckgradienten und hierdurch zu einem erfindungsgemäß detektierbaren Dichtegradienten. Die Differenz der Dichte am Ort der ersten schwingfähigen Einheit und am Ort der zweiten schwingfähigen Einheit ist umso höher, je schneller das Medium strömt. Zur Bestimmung der Strömungsgeschwindigkeit wird analog zu dem für Fig. 2 beschriebenen Verfahren die Differenz der Schwingfrequenzen der beiden mechanisch schwingfähigen Einheiten gebildet. Da die Dichteänderung als Folge einer Druckänderung auftritt, spielt die Temperaturabhängigkeit des Mediums von der Dichte eine untergeordnete Rolle, sodass dieses Messverfahren für alle Gase anwendbar ist. In Abhängigkeit der Strömungsrichtung trägt der dichteabhängige Term in der Differenz ein positives oder negatives Vorzeichen.

**Bezugszeichenliste**

| | |
|---|---|
| 1 | Rohrleitung |
| 2 | Heizelement |
| 3 | Begrenzungselement |
| 41 | Erste mechanisch schwingfähige Einheit |
| 42 | Zweite mechanisch schwingfähige Einheit |
| 43 | Dritte mechanisch schwingfähige Einheit |
| 44 | Vierte mechanisch schwingfähige Einheit |
| 5 | Elektronikeinheit |

**Patentansprüche**

**1.** Verfahren zur Bestimmung von zumindest einer Strömungseigenschaft eines im Wesentlichen laminar strömenden gasförmigen oder flüssigen Mediums in einer Rohrleitung (1),
wobei von mindestens einem in die Rohrleitung (1) eingebrachten Modulationselement (2, 3) in dessen Umgebung zumindest für den Fall, dass das Medium mit einer von Null verschiedenen Geschwindigkeit strömt, zumindest zeitweise eine Änderung der Dichte des Mediums erzeugt wird,
**dadurch gekennzeichnet,**
**dass** mindestens eine von dem Modulationselement (2, 3) beabstandet in die Rohrleitung (1) eingebrachte mechanisch schwingfähige Einheit (41) zu resonanten Schwingungen angeregt wird,
**dass** mechanische Schwingungen von der mechanisch schwingfähigen Einheit (41) empfangen und in ein elektrisches Empfangssignal umgewandelt werden, wobei das Empfangssignal sensitiv für die von dem Modulationselement (2, 3) veränderte Dichte ist,
und **dass** aus der Reaktion des Empfangssignals der mechanisch schwingfähigen Einheit (41) auf die Änderung in der Dichte die zumindest eine Strömungseigenschaft des Mediums bestimmt wird.

**2.** Verfahren nach Anspruch 1,
**dadurch gekennzeichnet,**
**dass** der Rohrdurchmesser von dem Modulationselement (3) verringert wird.

**3.** Verfahren nach Anspruch 1,
**dadurch gekennzeichnet,**
**dass** durch das Modulationselement (2) die Temperatur des Mediums in einer Umgebung des Modulationselements (2) verändert wird.

**4.** Verfahren nach Anspruch 3,
**dadurch gekennzeichnet,**
**dass** das Modulationselement (2) im Wesentlichen konstant beheizt wird.

**5.** Verfahren nach Anspruch 2 oder 4,
**dadurch gekennzeichnet,**
**dass** eine Differenz der Schwingfrequenzen der ersten mechanisch schwingfähigen Einheit (41) und einer zweiten mechanisch schwingfähigen Einheit (42) bestimmt wird, wobei die erste mechanisch schwingfähige Einheit (41) und die zweite mechanisch schwingfähige Einheit (42) entlang einer Längsachse (L) der Rohrleitung (1) im Wesentlichen symmetrisch um das Modulationselement (2, 3) angeordnet sind, und dass aus der Differenz der Schwingfrequenzen das Vorhandensein einer Strömung, die Strömungsrichtung und/oder die Strömungsgeschwindigkeit des Mediums ermittelt wird.

**6.** Verfahren nach Anspruch 3,
**dadurch gekennzeichnet,**
**dass** das Modulationselement (2) mit einem zeitlich veränderlichen Heizstrom beheizt wird, sodass eine zeitabhängige Änderung in der Temperatur des Mediums erzeugt wird.

**7.** Verfahren nach Anspruch 6,
**dadurch gekennzeichnet,**
**dass** aus dem Abstand zwischen der mechanisch schwingfähigen Einheit (41) und dem Modulationselement (2) und aus der zeitlichen Differenz zwischen der erzeugten Änderung in der Temperatur des Mediums und einer Änderung in dem Empfangssignal der schwingfähigen Einheit (41) als Reaktion auf die Änderung der Temperatur des vorbei strömenden Mediums die Strömungsgeschwindigkeit und/oder der Volumendurchfluss des Mediums bestimmt wird.

**8.** Verfahren nach Anspruch 6,
**dadurch gekennzeichnet,**
**dass** aus dem Abstand, in welchem eine zweite mechanisch schwingfähige Einheit (42) von der ersten mechanisch schwingfähigen Einheit (41) zwischen dieser (41) und dem Modulationselement (2) in der Rohrleitung (1) angeordnet ist, und aus der zeitlichen Differenz zwischen der mit der zweiten schwingfähigen Einheit (42) detektierten Änderung der Schwingfrequenz aufgrund der Temperaturänderung des Mediums und der mit der ersten schwingfähigen Einheit (41) detektierten Änderung der Schwingfrequenz aufgrund der Temperaturänderung die Strömungsgeschwindigkeit und/oder der Volumendurchfluss bestimmt wird.

**9.** Verfahren nach Anspruch 5, 7, oder 8,
**dadurch gekennzeichnet,**
**dass** von der ersten mechanisch schwingfähigen Einheit (41) und/oder der zweiten mechanisch schwingfähigen Einheit (42) die Dichte des Mediums bestimmt wird und aus der Dichte und der Strömungsgeschwindigkeit der Massendurchfluss bestimmt wird.

10. Vorrichtung zur Bestimmung von zumindest einer Strömungseigenschaft eines im Wesentlichen laminar strömenden gasförmigen oder flüssigen Mediums in einer Rohrleitung (1),
**dadurch gekennzeichnet,**
**dass** mindestens ein Modulationselement (2, 3) in die Rohrleitung (1) eingebracht ist, welches in seiner Umgebung zumindest für den Fall, dass das Medium mit einer von Null verschiedenen Geschwindigkeit strömt, zumindest zeitweise eine Änderung der Dichte des Mediums erzeugt,
**dass** mindestens eine mechanisch schwingfähige Einheit (41) von dem Modulationselement (2, 3) beabstandet in die Rohrleitung (1) eingebracht ist und resonante Schwingungen durchführt,
**dass** der mechanisch schwingfähigen Einheit (41) mindestens eine Elektronikeinheit (5) zugeordnet ist, welche mechanische Schwingungen von der mechanisch schwingfähigen Einheit (41) empfängt und in ein elektrisches Empfangssignal umwandelt, wobei das Empfangssignal sensitiv für die von dem Modulationselement (2, 3) veränderte Dichte ist,
und **dass** die Elektronikeinheit (5) aus der Reaktion des Empfangssignals der mechanisch schwingfähigen Einheit (41) auf die Änderung in der Dichte die zumindest eine Strömungseigenschaft des Mediums bestimmt.

11. Vorrichtung nach Anspruch 10,
**dadurch gekennzeichnet,**
**dass** als Modulationselement ein Begrenzungselement (3) in die Rohrleitung (1) eingebracht ist, welches den Rohrdurchmesser verringert und einen Druckgradienten in einem strömenden Medium erzeugt.

12. Vorrichtung nach Anspruch 10,
**dadurch gekennzeichnet,**
**dass** als Modulationselement ein Heizelement (2) in die Rohrleitung (1) eingebracht ist, welches in einer Umgebung des Heizelements (2) eine Temperaturänderung des Mediums bewirkt.

13. Vorrichtung nach einem der Ansprüche 10-12,
**dadurch gekennzeichnet,**
**dass** eine zweite mechanisch schwingfähige Einheit (42) derart in die Rohrleitung (1) eingebracht ist, dass die erste schwingfähige Einheit (41) und die zweite schwingfähige Einheit (42) entlang einer Längsachse (L) der Rohrleitung (1) im Wesentlichen symmetrisch um das Modulationselement (2, 3) angeordnet sind.

14. Vorrichtung nach einem der Ansprüche 10-13,
**dadurch gekennzeichnet,**
**dass** mindestens eine weitere mechanisch schwingfähige Einheit (42, 43, 44) zwischen dem Modulationselement (2) und der ersten mechanisch schwingfähigen Einheit (41) und/oder zwischen dem Modulationselement (2) und der zweiten mechanisch schwingfähigen Einheit (42) angeordnet ist.

**Claims**

1. Procedure designed to determine at least one flow characteristic of a gaseous or liquid medium with essentially laminar flow in a pipe (1),
wherein at least one modulation element (2, 3) introduced into the pipe (1) generates in its environment a change in the density of the medium at least temporarily at least in the case where the medium flows at a speed that differs from zero,
**characterized in that**
at least one unit (41) which is capable of mechanical vibration and is installed in the pipe (1) at a distance from the modulation element (2, 3) is excited to resonant vibrations,
**in that** mechanical vibrations are received by the unit (41) capable of mechanical vibration and are converted to an electrical reception signal, wherein the reception signal is sensitive to the density modified by the modulation element (2, 3),
and **in that** at least one flow characteristic of the medium is determined from the response of the reception signal of the unit (41) capable of mechanical vibration to the change in the density.

2. Procedure as claimed in Claim 1,
**characterized in that**
the pipe diameter is reduced by the modulation element (3).

3. Procedure as claimed in Claim 1,
**characterized in that**
the temperature of the medium is modified by the modulation element (2) in the vicinity of the modulation element (2).

4. Procedure as claimed in Claim 3,
**characterized in that**
the modulation element (2) is essentially constantly heated.

5. Procedure as claimed in Claim 2 or 4,
**characterized in that**
a difference is determined between the vibration frequencies of the first unit (41) capable of mechanical vibration and a second unit (42) capable of mechanical vibration, wherein the first unit (41) capable of mechanical vibration and the second unit (42) capable of mechanical vibration are arranged along a longitudinal axis (L) of the pipe (1) essentially in a symmetrical manner around the modulation element (2, 3), and **in that** the presence of a flow, the flow direction and/or the flow velocity of the medium is determined from the difference between the vibration frequencies.

6. Procedure as claimed in Claim 3,
**characterized in that**
the modulation element (2) is heated with a heating current which is variable over time such that a time-dependent change in the temperature of the medium is generated.

7. Procedure as claimed in Claim 6,
**characterized in that**
the flow velocity and/or the volume flow of the medium is determined from the distance between the unit (41) capable of mechanical vibration and the modulation element (2) and from the time difference between the generated change in the temperature of the medium and a change in the reception signal of the unit (41) capable of mechanical vibration as a response to the change in the temperature of the medium flowing by.

8. Procedure as claimed in Claim 6,
**characterized in that**
the flow velocity and/or the volume flow is determined from the distance at which a second unit (42) capable of mechanical vibration is arranged in relation to the first unit (41) capable of mechanical vibration, between the latter (41) and the modulation element (2) in the pipe (1), and from the difference in time between the change in the vibration frequency which is detected by the second unit (42) capable of mechanical vibration and is caused by the change in medium temperature, and the change in the vibration frequency detected by the first unit (42) capable of mechanical vibration and caused by the temperature change.

9. Procedure as claimed in Claim 5, 7 or 8,
**characterized in that**
the density of the medium is determined by the first unit (41) capable of mechanical vibration and/or the second unit (42) capable of mechanical vibration and that the mass flow is determined from the density and the flow velocity.

10. Unit for determining at least one flow characteristic of a gaseous or liquid medium with essentially laminar flow in a pipe (1),
**characterized in that**
at least one modulation element (2, 3) is introduced into the pipe (1) which generates in its environment at least temporarily a change in the density of the medium at least in the case where the medium flows at a speed that differs from zero,
at least one unit (41) which is capable of mechanical vibration is installed in the pipe (1) at a distance from the modulation element (2, 3) and performs resonant vibrations,
at least one electronic unit (5) is assigned to the unit (41) which is capable of mechanical vibration which receives mechanical vibrations from the unit (41) capable of mechanical vibration and converts them to an electrical reception signal, wherein the reception signal is sensitive to the density modified by the modulation element (2, 3),
and **in that** the electronic unit (5) determines the at least one flow characteristic of the medium from the response of the reception signal of the unit (41) capable of mechanical vibrations to the change in the density.

11. Unit as claimed in Claim 10,
**characterized in that**
a limitation element (3) is introduced in the pipe (1) as a modulation element, said limitation element reducing the pipe diameter and generating a pressure gradient in a flowing medium.

12. Unit as claimed in Claim 10,
**characterized in that**
a heating element (2) is introduced in the pipe (1) as the modulation element which causes a change in the medium temperature in the vicinity of the heating element (2).

13. Unit as claimed in one of the Claims 10 to 12,
**characterized in that**
a second unit (42) capable of mechanical vibration is introduced in the pipe (1) in such a way that the first unit (41) capable of mechanical vibration and the second unit (42) capable of mechanical vibration are arranged along a longitudinal axis (L) of the pipe (1) in an essentially symmetric manner around the modulation element (2, 3).

14. Unit as claimed in one of the Claims 10 to 13,
**characterized in that**
at least an additional unit (42, 43, 44) capable of mechanical vibration is arranged between the modulation element (2) and the first unit (41) capable of mechanical vibration and/or between the modulation element (2) and the second unit (42) capable of mechanical vibration.

**Revendications**

1. Procédé destiné à la détermination d'au moins une caractéristique d'écoulement d'un produit gazeux ou liquide s'écoulant pour l'essentiel de façon laminaire dans une conduite (1),
pour lequel est généré par au moins un élément de modulation (2, 3) installé dans la conduite (1), dans son environnement, au moins temporairement un changement de la densité du produit, au moins pour le cas où le produit s'écoule avec une vitesse différente de zéro,

**caractérisé**

**en ce qu'**est excitée en vibrations résonantes au moins une unité mécanique apte à vibrer (41) installée dans la conduite (1) à distance de l'élément de modulation (2, 3),

**en ce que** les vibrations mécaniques sont reçues par l'unité mécanique apte à vibrer (41) et converties en un signal de réception électrique, le signal de réception étant sensible à la densité modifiée par l'élément de modulation (2, 3), et en ce qu'est déterminée l'au moins une caractéristique d'écoulement du produit à partir de la réaction du signal de réception de l'unité mécanique apte à vibrer (41) par rapport au changement de la densité.

2. Procédé selon la revendication 1,
   **caractérisé**
   **en ce que** le diamètre brut de l'élément de modulation (3) est diminué.

3. Procédé selon la revendication 1,
   **caractérisé**
   **en ce que** la température du produit est modifiée par l'élément de modulation (2), dans un environnement de l'élément de modulation (2).

4. Procédé selon la revendication 3,
   **caractérisé**
   **en ce que** l'élément de modulation (2) est chauffé pour l'essentiel à une température constante.

5. Procédé selon la revendication 2 ou 4,
   **caractérisé**
   **en ce qu'**est déterminée une différence entre les fréquences de vibration de la première unité mécanique apte à vibrer (41) et d'une deuxième unité mécanique apte à vibrer (42), la première unité mécanique apte à vibrer (41) et la deuxième unité mécanique apte à vibrer (42) étant disposées le long d'un axe longitudinal (L) de la conduite (1), pour l'essentiel de façon symétrique autour de l'élément de modulation (2, 3), et en ce que sont déterminés, à partir de la différence entre les fréquences de vibration, la présence d'un écoulement, le sens d'écoulement et/ou la vitesse d'écoulement du produit.

6. Procédé selon la revendication 3,
   **caractérisé**
   **en ce que** l'élément de modulation (2) est chauffé avec un courant de chauffage variable dans le temps, si bien qu'est généré un changement de la température en fonction du temps.

7. Procédé selon la revendication 6,

**caractérisé**

**en ce que** sont déterminés la vitesse d'écoulement et/ou le débit volumique du produit à partir de la distance entre l'unité mécanique apte à vibrer (41) et l'élément de modulation (2) et à partir de la différence temporelle du changement généré de la température du produit et un changement du signal de réception de l'unité apte à vibrer (41) en tant que réaction au changement de température du produit en écoulement.

8. Procédé selon la revendication 6,
   **caractérisé**
   **en ce que** sont déterminés la vitesse d'écoulement et/ou le débit volumique à partir de la distance, à laquelle est disposée une deuxième unité mécanique apte à vibrer (42) par rapport à la première unité mécanique apte à vibrer (41), entre cette dernière (41) et l'élément de modulation (2) dans la conduite (1), et à partir de la différence temporelle entre le changement de la fréquence de vibration, détecté avec la deuxième unité mécanique apte à vibrer (42) sur la base du changement de température du produit, et le changement de la fréquence de vibration détecté avec la première unité mécanique apte à vibrer (41) sur la base du changement de température.

9. Procédé selon la revendication 5, 7 ou 8,
   **caractérisé**
   **en ce qu'**est déterminée par la première unité mécanique apte à vibrer (41) et/ou par la deuxième unité mécanique apte à vibrer (42) la densité du produit et en ce qu'est déterminé le débit massique à partir de la densité et de la vitesse d'écoulement.

10. Dispositif destiné à la détermination d'au moins une caractéristique d'écoulement d'un produit gazeux ou liquide s'écoulant pour l'essentiel de façon laminaire dans une conduite (1)
    **caractérisé**
    **en ce qu'**est installé dans la conduite (1) au moins un élément de modulation (2, 3) générant, dans son environnement, au moins temporairement un changement de la densité du produit, au moins pour le cas où le produit s'écoule avec une vitesse différente de zéro,
    **en ce qu'**est installée dans la conduite (1) au moins une unité mécanique apte à vibrer (41) à distance de l'élément de modulation (2, 3) et exécute des vibrations résonantes,
    **en ce qu'**est attribuée à l'unité mécanique apte à vibrer (41) au moins une unité électronique (5), laquelle reçoit les vibrations mécaniques de l'unité mécanique apte à vibrer (41) et les convertit en un signal de réception électrique, le signal de réception étant sensible à la densité modifiée par l'élément de modulation (2, 3), et en ce que l'unité électronique (5) détermine, à partir de la réaction du signal de réception de l'unité mécanique apte à vibrer (41) par rapport au changement de la densité, l'au moins une caractéristique d'écoulement du produit.

**11.** Dispositif selon la revendication 10, **caractérisé en ce qu'**est installé dans la conduite (1), en tant qu'élément de modulation, un élément de limitation (3) réduisant le diamètre brut et générant un gradient de pression dans un produit en écoulement.

**12.** Dispositif selon la revendication 10, **caractérisé en ce qu'**est installé dans la conduite (1), en tant qu'élément de modulation, un élément de chauffage (2) provoquant un changement de température du produit dans un environnement de l'élément de chauffage (2).

**13.** Dispositif selon l'une des revendications 10 à 12, **caractérisé en ce qu'**est installée dans la conduite (1) une deuxième unité mécanique apte à vibrer (42), de telle sorte que la première unité mécanique apte à vibrer (41) et la deuxième unité mécanique apte à vibrer (42) soient disposées le long d'un axe longitudinal (L) de la conduite (1), pour l'essentiel de façon symétrique autour de l'élément de modulation (2, 3).

**14.** Dispositif selon l'une des revendications 10 à 13, **caractérisé en ce qu'**est disposée au moins une autre unité mécanique apte à vibrer (42, 43, 44) entre l'élément de modulation (2) et la première unité mécanique apte à vibrer (41) et/ou entre l'élément de modulation (2) et la deuxième unité mécanique apte à vibrer (42).

Fig. 1

Fig. 2

Fig. 3

Fig. 3a

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005005710 A1
- DE 29607315 U1
- US 4922745 A
- WO 2007074004 A1